Europäisches Patentamt

European Patent Office

Office européen des brevets

(11) Publication number: **0 141 509**
**B1**

# (12) EUROPEAN PATENT SPECIFICATION

(45) Date of publication of patent specification: **06.06.90**

(51) Int. Cl.⁵: **A 01 N 37/32, A 01 N 25/14**

(21) Application number: **84306116.9**

(22) Date of filing: **07.09.84**

(54) An easily water-dispersible procymidone-containing granular preparation.

(30) Priority: **16.09.83 JP 171884/83**

(43) Date of publication of application:
**15.05.85 Bulletin 85/20**

(45) Publication of the grant of the patent:
**06.06.90 Bulletin 90/23**

(84) Designated Contracting States:
**DE**

(56) References cited:
**US-A-3 737 551**
**US-A-3 791 811**
**US-A-3 920 442**

**C.R. WORTHING: "The pesticide manual", 6th
edition, 1979, page 437, BCPC Publications,
Croydon, GB;**

(73) Proprietor: **SUMITOMO CHEMICAL COMPANY,
LIMITED**
**Kitahama 4-chome 5-33**
**Chuo-ku Osaka 541 (JP)**

(72) Inventor: **Okamoto, Yukikazu**
**1-11, Hachizuka-1-Chome**
**Ikeda-Shi (JP)**
Inventor: **Tagami, Manabu**
**4-1-104, Ryodocho**
**Nishinomiya-Shi (JP)**
Inventor: **Sakoda, Mitsuharu**
**14-7, Mefu-2-Chome**
**Takaratuka-Shi (JP)**
Inventor: **Tsuji, Kozo**
**103-1, Shigigaoka Sangocho**
**Ikoma-Gun Nara-Ken (JP)**
Inventor: **Noda, Chikara**
**60, Nishikasaharacho**
**Kasai-Shi (JP)**

(74) Representative: **Harrison, David Christopher
et al**
**MEWBURN ELLIS & CO 2/3 Cursitor Street
London EC4A 1BQ (GB)**

**Description**

The present invention relates to an easily water-dispersible procymidone [N-(3,5-dichlorophenyl)-1,2-dimethylcyclopropane-1,2-dicarboximide]-containing granular preparation (hereinafter referred to as "the present preparation"), its production and a method for controlling plant diseases with it.

Well-known pesticidal preparations which are sprayed in dilution with water include emulsifiable concentrates and wettable powders. However, the emulsifiable concentrates, because they contain large quantities of organic solvent as a carrier, have problems associated with them such as inflammability, offensive smell, toxicity, and irritations, and furthermore, phytotoxicity becomes more apparent in crops depending upon the active ingredient contained in them. Likewise, the wettable powders also have a problem associated with them in that, because they contain large quantities of inorganic substances as carriers, they are scattered as fine powders at the time of production and dilution with water.

Procymidone, the active ingredient of the present preparation, has a high controlling effect on plant diseases; see "The Pesticide Manual", Ed., Charles R. Worthing, The British Crop Protection Council, 6th Edn., 1979, page 437. It is highly effective against diseases such as stem rot, and gray mold. However, depending upon the number of times of spraying and spraying concentration as well as environmental conditions such as temperature, humidity, etc. and the kind and growing conditions of the crops to be sprayed, phytotoxic effects sometimes appear on the crops, thus resulting in a reduction in the yield of the crops and a lowering in the quality thereof.

We have given due regard to these problems, and made an extensive study on pesticidal preparations containing procymidone as an active ingredient, and as a result, have found that the present preparation produced by spray-drying an aqueous suspension containing procymidone as an active ingredient and a water-soluble polymer as a dispersing agent, can solve these problems.

Thus, the present invention provides a pesticide or fungicide preparation in granular form comprising from 10 to 95% inclusive, by weight of the total weight of the preparation, of procymidone as an active ingredient and from 3 to 90% inclusive, by weight of the total weight of the preparation, of a water-soluble polymer as a dispersing agent.

The present preparation, like emulsifiable concentrates and wettable powders, can be sprayed in dilution with large quantities of water as well as in dilution with small quantities of water, that is, in high concentrations. Consequently, various problems associated with large-volume application of pesticidal preparations can be avoided. Further, the present preparation requires no auxiliaries other than a dispersing agent and besides has a small bulk and good flowability, so that it is advantageous in many respects such as formulation, packing, storage, and transport.

As the water-soluble polymer used as the dispersing agent in the present preparation, there are given for example vegetable-origin polymers such as sodium alginate, gum arabic, and gum tragacanth, cellulose derivatives such as methyl cellulose, and carboxymethyl cellulose, water-soluble synthetic polymers such as polyvinyl alcohol, sodium polyacrylate, and polyethylene glycol, lignin sulfonic acid, alkylarylsulfonic acids, alkylnaphthalenesulfonic acid formalin condensates, metallic salts of these acids and mixtures thereof. Further, for example, lauryl sulfates and dodecylbenzenne sulfonates may be added in small amounts as the need arises.

To procymidone which is an active ingredient, fine powders of the following substances may be added as a filler if necessary: polysaccharides such as cane sugar, grape sugar, milk sugar, and dextrin, fertilizers such as ammonium sulfate, ammonium phosphate, ammonium chloride, and urea, inorganic substances such as kaolin, calcite, and talc, synthetic resins such as polystyrene, polyvinyl chloride, and polyethylene, and celluloses. Other solid agricultural chemicals may be mixed into the preparations as active ingredients.

The present preparation contains from 10 to 95% inclusive, preferably 50 to 90% inclusive, by weight of the total weight of the preparation, of the active ingredient, procymidone, from 3 to 90% inclusive, preferably 5 to 50% inclusive, by weight of the total weight of the preparation, of the dispersing agent and a suitable amount of the filler as the need arises.

For producing a preparation embodying the invention, an aqueous suspension of procymidone is produced by finely pulverizing procymidone on a dry-pulverizer such as a hammer mill, or jet mill, together with the filler and other solid agricultural chemicals if necessary and dispersing the pulverized product in an aqueous solution of the water-soluble polymer or polymers, or by wet-pulverizing a mixture of procymidone, an aqueous solution of the water-soluble polymer and if necessary the filler and other solid agricultural chemicals on wet-pulverizers such as attrition mills, or sand grinders, using glass beads of 0.5 to 2.0 mm in diameter, and then the aqueous suspension produced is spray-dried with spray-driers. The particle diameter of the active ingredient in the aqueous suspension may be up to a maximum of $20\mu$, and is preferably not more than $10\mu$, and the total content of the active ingredient, water-soluble polymers and the filler added as need arises, may be 20 to 70%, preferably 30 to 60%. Spray-drying is preferably carried out on a spray-drier of such specification that: it has a pressure nozzle; the diameter of the nozzle orifice is 0.5 to 3.0 mm; the spraying pressure is 3 to 20 $kg/cm^2$; and the drying temperature is not more than 150°C by exhaust temperature. The present preparation thus produced is a granular preparation having a particle diameter which may be about 0.1 to about 1.0 mm. The present preparation may be diluted with water so that the concentration of procymidone, an active ingredient, is 250 to 500 ppm, in which case the surface tension of this aqueous dilute liquid may be down to a minimum of 0,06 N/m (60 dyne/cm) which is higher than that of the aqueous liquid of conventional emulsifiable concentrates and wettable powders. In this manner, an improvement in the efficacy of the procymidone and a reduction in the phytotoxicity thereof can be achieved.

Practical and presently preferred embodiments for the production of the present preparation are as follows, wherein parts and % are by weight.

### Example 1

Eighty parts of procymidone was added to a solution of 15 parts of sodium dinaphthylmethane-disulfonate and 5 parts of sodium lignosulfonate in 200 parts of water and wet-pulverized for 60 minutes on a sand grinder using 300 parts of 12 to 28-mesh glass beads. Thereafter, the glass beads were removed by means of 60-mesh wire net, and the separated suspension was spray-dried on a hot air parallel flow type spray drier equipped with a pressure spray nozzle of 1.0 mm nozzle orifice diameter at a spraying pressure of 10 kg/cm². An 80% procymidone-containing easily water-dispersible granular preparation was obtained. The content of 32 to 100-mesh granules of this preparation was 92%, and when this preparation was diluted with water so that the concentration of procymidone was 400 ppm, the surface tension of the aqueous dilute liquid was 0,069 N/m (69 dyne/cm).

### Example 2

Fifty parts of procymidone was added to a solution of 20 parts of sodium alkylnaphthalenesulfonate formalin condensate, 2 parts of gum arabic and 28 parts of urea in 150 parts of water, wet-pulverized and spray-dried in the same manner as in Example 1 to obtain a 50% procymidone-containing easily water-dispersible granular preparation. The contents of granules having particle diameters of more than 32-mesh, 32 to 60-mesh and less than 60-mesh of this preparation were 3.2%, 85% and 11.8%, respectively. When this preparation was diluted with water so that the concentration of procymidone was 500 ppm, the surface tension of the aqueous dilute liquid was 0,063 N/m (63 dyne/cm).

Examples of an efficacy test and a phytotoxicity test using the present preparation and a commercially available 50% procymidone-containing wettable powder will be shown.

Efficacy test example        Controlling effect on gray mold of cucumber (*Botrytis cinerea*)

An aqueous dilute liquid of each of two of the present preparations and of a commercially available 50% procymidone-containing wettable powder was sprayed by means of a spray gun onto respective samples of cucumber seedlings in the cotyledonous stage cultivated in a flower pot 9 cm in diameter so that the spray liquid was thoroughly attached to the leaf surface. The seedlings were inoculated with *Botrytis cinerea* at the day of spraying and seven days after the spraying and kept at 25°C under a highly humid condition. Three days after the inoculation, the diameter of the infected area was measured to assess disease severity, and then control of the disease was calculated from the following equation. The results are shown in Table 1.

| Disease severity | Diameter of infected area |
|---|---|
| 0 | No infected area |
| 1 | Less than 5 mm |
| 2 | Not less than 5 mm to less than 10 mm |
| 4 | Not less than 10 mm to less than 15 mm |
| 8 | Not less than 15 mm |

$$\text{Control of disease (\%)} = \frac{\text{Disease severity in untreated plot} - \text{disease severity in treated plot}}{\text{Disease severity in untreated plot}} \times 100$$

## Table 1

| | Surface tension of aqueous dilute liquid (dyne/cm) ($10^{-3}$ N/m) | Concentration of active ingredient in aqueous dilute liquid (ppm) | Control disease (%) | |
| --- | --- | --- | --- | --- |
| | | | Inoculation at the day of spraying | Inoculation seven days after spraying |
| Aqueous dilute liquid of the present preparation of Example 1 | 71<br>68<br>67 | 62.5<br>125<br>250 | 81.3<br>98.4<br>100 | 53.1<br>76.6<br>93.2 |
| Aqueous dilute liquid of the present preparation of Example 2 | 65<br>64<br>64 | 62.5<br>125<br>250 | 80.8<br>96.9<br>100 | 51.5<br>75.2<br>91.8 |
| Aqueous dilute liquid of the commercially available 50% procymidone-containing wettable powder | 59<br>57<br>53 | 62.5<br>125<br>250 | 83.6<br>98.0<br>100 | 54.7<br>74.8<br>93.7 |
| Untreated plot | - | - | 0 | 0 |

EP 0 141 509 B1

Phytotoxicity test example

An aqueous dilute liquid of each of two of the present preparations and of a commercially available 50% procymidone-containing wettable powder was sprayed by means of a small automatic sprayer onto respective samples of the young shoots of grape (variety, Delaware) cultivated in a flower pot 9 cm in diameter so that the leaf surface was thoroughly wetted. Sixteen days after the spraying, the percentage of an area suffering from phytotoxicity was examined to obtain a phytotoxicity index, and the degree of phytotoxicity was calculated from the following equation

The results are shown in Table 2.

| Phytotoxicity index | Percentage of area suffering from phytotoxicity |
|---|---|
| 0 | No area suffering from phytotoxicity |
| 1 | Less than 5% |
| 2 | Not less than 5% to less than 30% |
| 3 | Not less than 30% to less than 60% |
| 4 | Not less than 60% to less than 80% |
| 5 | Not less than 80% |

$$\text{Degree of phytotoxicity (\%)} = \frac{\Sigma \left( \text{Phytotoxicity index x number of leaves} \right)}{\text{Total number of leaves x 5}} \times 100$$

Table 2

| | Surface tension of aqueous dilute liquid (dyne/cm) $(10^{-3} \text{ N/m})$ | Concentration of active ingredient in aqueous dilute liquid (ppm) | Degree of phytotoxicity (%) |
|---|---|---|---|
| Aqueous dilute liquid of the present preparation of Example 1 | 65 | 500 | 0.4 |
| Aqueous dilute liquid of the present preparation of Example 2 | 63 | 500 | 0.2 |
| Aqueous dilute liquid of the commercially available 50% procymidone-containing wettable powder | 47 | 500 | 14.4 |
| Untreated plot | - | - | 0 |

**Claims**

1. A pesticide or fungicide preparation in granular form comprising from 10 to 95% inclusive, by weight of the total weight of the preparation, or procymidone as an active ingredient and from 3 to 90% inclusive, by weight of the total weight of the preparation, of a water-soluble polymer as a dispersing agent.

2. A preparation according to Claim 1 wherein the procymidone is present in an amount of from 50 to 90% inclusive by weight of the total weight of the preparation.

3. A preparation according to Claim 1 or Claim 2, wherein the water-souble polymer is present in an amount of from 5 to 50% by weight of the total weight of the preparation.

4. A method for producing a pesticide or fungicide preparation in granular form, which preparation comprises from 10 to 95% inclusive, by weight of the total weight of the preparation, of procymidone as an active ingredient and from 3 to 90% inclusive, by weight of the total weight of the preparation, of a water-soluble polymer as a dispersing agent, and which method comprises spray-drying an aqueous suspension containing the procymidone and the water-soluble polymer.

5. A method according to Claim 4, wherein the aqueous suspension is produced by finely pulverizing procymidone on a dry-pulverizer and dispersing the pulverized product in an aqueous solution of the water-soluble polymer.

6. A method according to Claim 4, wherein the aqueous suspension is produced by wet-pulverizing a mixture of procymidone and an aqueous solution of the water-souble polymer in a wet-pulverizer using glass beads of from 0.5 or 2.0 mm inclusive in diameter.

7. A method for controlling plant diseases which comprises applying the procymidone-containing granular preparation according to Claim 1 to the plant.

**Patentansprüche**

1. Pestizid- oder Fungizidzubereitung in Granulatform mit, jeweils bezogen auf das Gesamtgewicht der Zubereitung, 10 bis einschließlich 95 Gew.% Procymidone als aktivem Bestandteil und 3 bis einschließlich 90 Gew.-% eines wasserlöslichen Polymerisats als Dispergiermittel.

2. Zubereitung nach Anspruch 1, dadurch gekennzeichnet, daß das Procymidone, bezogen auf das Gesamtgewicht der Zubereitung, in einer Menge von 50—90 Gew-% vorhanden ist.

3. Zubereitung nach Anspruch 1 oder 2, dadurch gekennzeichnet, daß das wasserlösliche Polymerisat, bezogen auf das Gesamtgewicht der Zubereitung, in einer Menge von 5 bis einschließlich 50 Gew.-% vorhanden ist.

4. Verfahren zur Herstellung eines Pestizid- oder Fungizidzubereitung in Granulatform mit, jeweils bezogen auf das Gesamtgewicht der Zubereitung, 10 bis einschließlich 95 Gew.-% Procymidone als aktivem Bestandteil und 3 bis einschließlich 90 Gew.-% eines wasserlöslichen Polymerisats als Dispergiermittel durch Sprühtrocknen einer das Procymidone und das wasserlösliche Polymerisat enthaltenden wäßrigen Suspension.

5. Verfahren nach Anspruch 4, dadurch gekennzeichnet, daß die wäßrige Suspension durch feines Pulverisieren von Procymidone auf einem Trockenzerstäuber und Dispergieren des pulverisierten Produkts in einer wäßrigen Lösung des wasserlöslichen Polymerisats erfolgt.

6. Verfahren nach Anspruch 4, dadurch gekennzeichnet, daß die wäßrige Suspension durch Naßpulverisieren eines Gemischs aus Procymidone und einer wäßrigen Lösung des wasserlöslichen Polymerisats in einem Naßzerstäuber unter Verwendung von Glasperlen eines Durchmessers von 0,5 bis einschließlich 2,0 mm erfolgt.

7. Verfahren zur Bekämpfung von Pflanzenkrankheiten durch Applikation der procymidonehaltigen Granulatzubereitung nach Anspruch 1 auf die Pflanze.

**Revendications**

1. Préparation pesticide ou fongicide sous forme granulaire comprenant de 10 à 95% inclus, en poids, du poids total de la préparation, de procymidone en tant qu'ingrédient actif et de 3 à 90% inclus, en poids, du poids total de la préparation, d'un polymère soluble dans l'eau comme agent dispersant.

2. Préparation selon la revendication 1, où la procymidone est présente en une quantité de 50 à 90% inclus, en poids, du poids total de la préparation.

3. Préparation selon la revendication 1 ou 2, où le polymère soluble dans l'eau est présent en une quantité de 5 à 50% inclus, en poids, du poids total de la préparation.

4. Méthode de production d'une préparation pesticide ou fongicide sous forme granulaire, laquelle préparation contient 10 à 95% inclus, en poids, du poids total de la préparation, de procymidone comme ingrédient actif et 3 à 90% inclus, en poids, du poids total de la préparation, d'un polymère soluble dans l'eau en tant qu'agent dispersant, laquelle méthode comprend le séchage par pulvérisation d'une suspension aqueuse contenant la procymidone et le polymère soluble dans l'eau.

5. Méthode selon la revendication 4, où la suspension aqueuse est produite par pulvérisation fine de la procymidone sur un pulvérisateur à sec et la dispersion du produit pulvérisé dans une solution aqueuse du copolymère soluble dans l'eau.

6. Méthode selon la revendication 4, où la suspension aqueuse est produite par pulvérisation en phase humide d'un mélange de procymidone et d'une solution aqueuse du polymère soluble dans l'eau dans un pulvérisateur humide en utilisant des perles de verre de 0,5 à 2,0 mm inclus de diamètre.

7. Méthode pour contrôler les maladies des plantes qui consiste à appliquer la préparation granulaire contenant la procymidone selon la revendication 1, à la plante.